# EUROPEAN PATENT SPECIFICATION

(11) **EP 1 748 649 B1**
(45) Date of publication and mention of the grant of the patent: **06.11.2013**
(21) Application number: 06117110.4
(22) Date of filing: 13.07.2006
(51) Int. Cl.: H04N 5/445, H04N 5/44, H04N 7/10, H04L 12/28

(54) **Broadcasting signal handling**
Verarbeitung von Rundfunksignalen
Traitement de signaux de radiodiffusion

(30) Priority: 25.07.2005 KR 20050067550
(43) Date of publication of application: 31.01.2007
(73) Proprietor: Samsung Electronics Co., Ltd., Suwon-si, Gyeonggi-do, 443-742 (KR)
(72) Inventor: Lee, Kab-keun, Yeongtong-gu Suwon-si Gyeonggi-do (KR); Lee, Bong-geun, Gyeonggi-do (KR)
(74) Representative: Hewett, Jonathan Michael Richard

(56) References cited:
- WO-A-00/30350
- US-A- 5 666 293
- US-A- 6 064 420
- US-A1- 2001 039 660
- US-A1- 2004 010 565
- US-B1- 6 259 891

## Description

The present invention relates to a broadcasting receiving/transmitting device, and to a method of operating a wireless A/V system.

There are now widely used wireless audio/video (A/V) systems which transmit image and audio data by wireless transmission, that is, without connecting A/V apparatuses by wire.

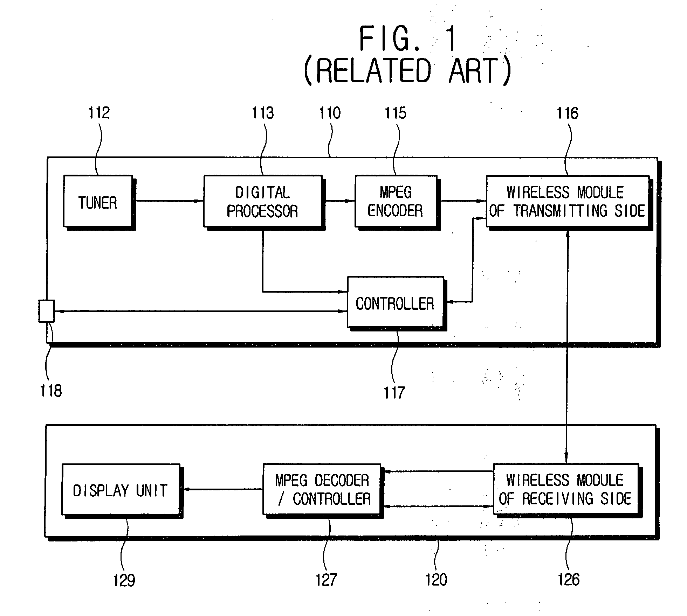

Figure 1 shows an example of a conventional wireless A/V system. The conventional wireless A/V system comprises a broadcasting receiving/transmitting device 110 and a wireless receiving device 120 provided with a broadcasting signal from the broadcasting receiving/transmitting device 110 by wireless transmission.

The broadcasting receiving/transmitting device 110 comprises a tuner 112, a digital processor 113, a moving picture expert group (MPEG) encoder 115, a wireless module of a transmitting side 116 and a controller 117.

The tuner 112 receives an RF signal of a broadcasting signal and tunes at least one channel of the received broadcasting signal according to control by the controller 117. The digital processor 113 converts the analogue broadcasting signal into digital data.

The MPEG encoder 115 encodes digital data in an MPEG encoding format and outputs it so that the digital data output from the digital processor 113 is transmitted by wireless transmission via the wireless module of the transmitting side 116.

The wireless module of the transmitting side 116 transmits the data encoded by the MPEG encoder 115 by wireless transmission.

The wireless receiving device 120 comprises a wireless module of a receiving side 126 and an MPEG decoder/controller 127.

The wireless module of the receiving side 126 receives the data transmitted via the wireless module of the transmitting side 116 of the broadcasting receiving/transmitting device 110 and provides it to the MPEG decoder/controller 127.

The MPEG decoder/controller 127 decodes the data received via the wireless module of the receiving side 126, converts it into an image or an audio format signal, and then outputs it. In this case, the image signal is provided to a display unit 129 to display an image and the audio signal is provided to an amplifier (not shown) to express a sound.

The controller 117 of the broadcasting receiving/transmitting device 110 detects EPG information in a vertical blanking interval (VBI) of the broadcasting signal. Further, the controller 117 generates the EPG menu data based on the detected EPG information and transmits the EPG menu data to the wireless receiving device 120 via the wireless module of the transmitting side 116 when a user selects to display the EPG menu. The MPEG decoder/controller 127 converts the EPG menu data received via the wireless module of the receiving side 126 in a format to be displayed on the display unit 129.

Here, transmitting/receiving the data by wireless transmission between the wireless module of the transmitting side 116 of the broadcasting receiving/transmitting device 110 and the wireless module of the receiving side 126 of the wireless receiving device 120 is performed in different areas, that is, an A/V signal area and a user data area, according to the kind of data transmitted.

The A/V signal area is where the encoded data, for example A/V data output from the MPEG encoder 115 of the broadcasting receiving/transmitting device 110, is transmitted. The user data area is where data other than the A/V data is transmitted/received. Accordingly, EPG data is transmitted via the user data area. Such EPG data includes the EPG menu data and an EPG debugging signal for debugging the EPG transmitted via a debugging signal transmitting/receiving part 118 from the broadcasting receiving/transmitting device 110 to the wireless receiving device 120.

An example of such a conventional A/V system is described by the patent application US 2001/0039660.

However, in the conventional wireless A/V system, if the EPG menu data has a higher transmission rate, for example,1200 bits per second (bps), than a data transmission rate in the user data area, there is a possibility of failing to transmit the EPG menu data. Also, in case that a maximum transmission rate of the EPG debugging signal is 14400 bps or more, there is a possibility of failing to debug the EPG.

Currently, although a transmittance rate is assured to be enough in the user data area, e.g. 15800 bps, it is almost impossible to transmit the EPG debugging signal which requires two-way communication in real-time.

Accordingly there is a need for an improved broadcasting receiving/transmitting device, wireless system and control method capable of transmitting EPG information.

An aspect of the present invention provides a broadcasting receiving/transmitting device, a wireless A/V system and a control method of a wireless A/V system which transmits an EPG menu data and/or an EPG debugging signal which are generated on EPG information by wireless transmission via an A/V signal area, thereby solving an error caused by transmitting the EPG menu data and/or the EPG debugging signal and achieving two-way communication of the EPG debugging signal.

Aspects of the present invention are achieved by providing a broadcasting receiving/transmitting device encoding a broadcasting signal in an encoding format and transmitting it to an external device by wireless transmission, comprising: a broadcasting signal processor for encoding a broadcasting signal according to an encoding format and outputting it; a wireless module to transmit the encoded broadcasting signal to an external device by wireless transmission; and a controller detecting Electronic Program Guide (EPG) information from the broadcasting signal, generating EPG menu data based on the detected EPG information and controlling the broadcasting signal processor so as to encode at least one of the EPG menu data and the broadcasting signal according to the encoding format to be transmitted to the external device via the wireless module.

The broadcasting signal processor may comprise: a tuner receiving the broadcasting signal; a digital processor converting the broadcasting signal received from the tuner into digital data; an encoder encoding the digital data from the digital processor according to the encoding format to be output; and a data selecting part inputting at least one of the EPG menu data and the digital data to the encoder according to control by the controller.The encoding format may comprise an MPEG format.

The broadcasting receiving/transmitting device may further comprise a debugging signal transmitting/receiving part for transmitting/receiving an EPG debugging signal for debugging an EPG; wherein the controller encodes the debugging signal received via the debugging signal transmitting/receiving part through the encoder to thereby be transmitted to the external device.

A data transmitting area by wireless transmission between the wireless module of the transmitting side and the external device may comprise an A/V signal area to transmit data which is encoded through the encoder and a user data area to transmit data other than the data which is encoded through the encoder.

Aspects of the present invention are achieved by providing a wireless A/V system as defined by claim 1 and the corresponding operation method as defined by claim 5.

An embodiment of the present invention will now be described with reference to the accompanying drawings, in which:
Figure 1 is a control block diagram of a conventional wireless A/V system;
Figure 2 is a control block diagram of a wireless A/V system according to the present invention; and
Figure 3 is a flow chart of a broadcasting receiving/transmitting device according to the present invention.

Throughout the drawings, the same drawing reference numerals refer to like elements, features, and structures.

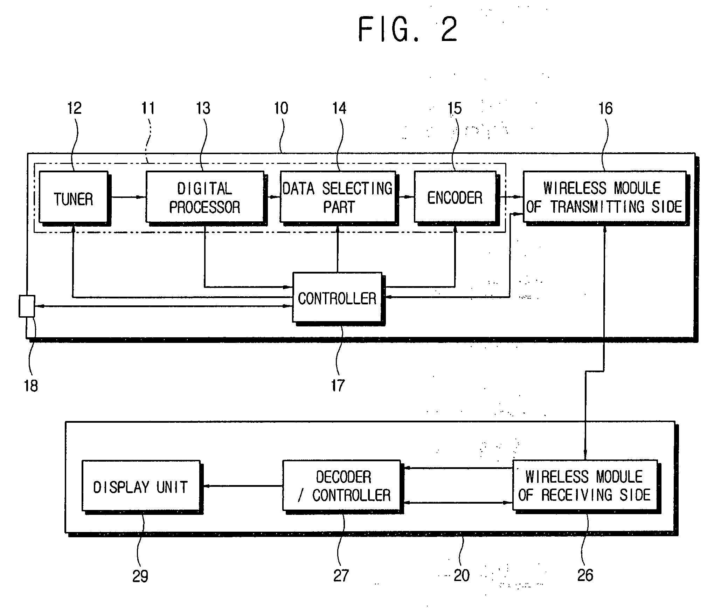

As shown in Figure 2, a wireless A/V system comprises a broadcasting receiving/transmitting device 10 and a wireless receiving device 20.

The broadcasting receiving/transmitting device 10 comprises a broadcasting signal processor 11, a wireless module of a transmitting side 16 and a controller 17.

The broadcasting signal processor 11 encodes a broadcasting signal in an encoding format and outputs it to the wireless module of the transmitting side 16. Here, the broadcasting signal processor 11 comprises a tuner 12, a digital processor 13, an encoder 15 and a data selecting part 14.

The tuner 12 receives an RF signal of a broadcast signal and tunes at least one channel of the received broadcast signal according to control by the controller 17. The digital processor 13 converts the analogue broadcast signal into digital data.

The encoder 15 encodes the digital data in an encoding format so that the digital data output from the digital processor 13 is transmitted by wireless transmission via the wireless module of the transmitting side 16. For example, the encoder 15 encodes the digital data in an MPEG encoding format.

The data selecting part 14 inputs at least one of the digital data output from the digital processor 13 and EPG menu data output from the controller 17 to the encoder 15 according to control by the controller 17.

Meanwhile, the wireless module of the transmitting side 16 transmits the data encoded by the encoder 15 of the broadcasting signal processor 11 by wireless transmission to a wireless module of a receiving side 26 of a wireless receiving device 20.

Transmitting/receiving the data by wireless transmission between the wireless module of the transmitting side 16 of the broadcasting receiving/transmitting device 10 and the wireless module of the receiving side 26 of the wireless receiving device 20 is performed in different areas, that is, an A/V signal area and a user data area, according to the kind of data transmitted.

The encoded data output from the encoder 15 of the broadcasting receiving/transmitting device 10 is transmitted to the wireless receiving device 20 via the A/V signal area. That is, the EPG menu data as well as the broadcast signal encoded in the encoder 15 of the broadcasting receiving/transmitting device 10 may be transmitted to the wireless receiving device 20 via the A/V signal area.

The controller 17 detects EPG information of the broadcast signal received via the tuner 12. Furthermore, the controller 17 generates the EPG menu data based on the detected EPG information and outputs the generated EPG menu data to the encoder 15 when a user selects to display the EPG menu. Herein, the controller 17 may detect the EPG information in a VBI of the broadcasting signal.

The controller 17 controls the data selecting part 14 so that at least one of the digital data output from the digital processor 13 and the EPG menu data output from the controller 17 may be input to the encoder 15. In case that a user selects to display the EPG menu, the controller 17 controls the data selecting part 14 so that the EPG menu data is input to the encoder 15.

The wireless receiving device 20 comprises the wireless module of the receiving side 26 and a decoder/signal processor 27.

The wireless module of the receiving side 26 performs wireless data communication with the wireless module of the transmitting side 16 of the broadcasting receiving/transmitting device 10 via the A/V signal area and the user data area.

The decoder/signal processor 27 decodes the data received through the A/V signal area of the wireless module of the receiving side 26, converts the decoded data into an image or an audio format signal, and then outputs it. The image signal may be provided to a display unit 29 to display an image and the audio signal is provided to an amplifier (not shown) to express a sound.

At this point, the data received through the A/V signal area of the wireless module of the receiving side 26, which is a data encoded by the encoder 15 of the broadcasting receiving/transmitting device 10, corresponds to at least one of the digital data from the digital processor 13 and the EPG menu data from the controller 17.

The broadcasting receiving/transmitting device 10 may further comprise a debugging signal transmitting/receiving part 18 to transmit/receive the EPG debugging signal for debugging the EPG. The controller 17 outputs the EPG debugging signal received via the debugging signal transmitting/receiving part to the encoder 15. Then, the EPG debugging signal is encoded by the encoder 15 and is transmitted to the wireless receiving device 20 via the A/V signal area of the wireless module of the transmitting side 16. Accordingly, a transmission rate is assured to be sufficient when the EPG debugging signal is transmitted between the broadcasting receiving/transmitting device 10 and the wireless receiving device 20, thereby allowing two-way communication in real-time.

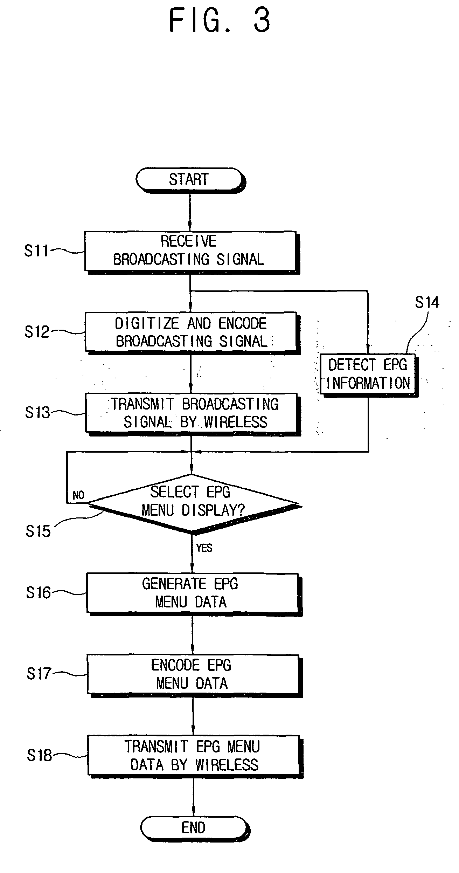

Hereinafter, a control process of the broadcasting receiving/transmitting device 10 of the wireless A/V system will be described with reference to Figure 3.

First, when a broadcasting signal is received via the tuner 12 at operation S11, the broadcasting signal is digitised in the digital processor 13 and encoded in the encoder 15 at operation S12. The broadcasting signal is transmitted to the wireless receiving device 20 via the wireless module of the transmitting side 16 at operation S13. Meanwhile, the controller 17 detects EPG information of the broadcasting signal in the process of transmitting the broadcasting signal at operation S14.

While performing the aforementioned processes, the controller 17 determines whether display of an EPG menu is selected at operation S15. Herein, the display of the EPG menu is selected by, for example, a remote control device, or a selection button provided in the broadcasting receiving/transmitting device 10 or the wireless receiving device 20.

If the display of the EPG menu is selected, the controller 17 generates an EPG menu data based on the EPG information and outputs it at operation S16. Further, the controller 17 controls the data selecting part 14 so that the EPG menu data is input to the encoder 15 among the EPG menu data and the digital data output from the digital processor 13.

Thereafter, the encoder 15 encodes the EPG menu data according to an encoding format at operation S17 and outputs it to the wireless module of the transmitting side 16. The wireless module of the transmitting side 16 transmits the encoded EPG menu data to the wireless receiving device 20 at operation S18.

Accordingly, the decoder/signal processor 27 of the wireless receiving device 20 decodes the encoded EPG menu data received via the wireless module of the receiving side 26 and outputs it to the display unit 29, so that the EPG menu data is displayed on a screen.

Although an embodiment of the present invention has been shown and described, it will be appreciated by those skilled in the art that changes may be made in these embodiments without departing from the invention, the scope of which is defined in the appended claims.

## Claims

1. A broadcast receiving/transmitting device comprising:
an encoder (15) arranged to output encoded data according to an MPEG format;
a wireless module (16) for transmitting the encoded data to an external device (20) by wireless transmission; and
a controller (17) arranged to detect Electronic Program Guide (EPG) information in a received broadcast signal, to generate EPG menu data based on the detected EPG information, and to control the encoder (15) to encode the EPG menu data and the broadcast signal for transmitting the encoded data to the external device (20) via the wireless module (16); and
a debugging signal transmitting/receiving part (18) for transmitting/receiving an EPG debugging signal for enabling debugging of the EPG information;
wherein the controller outputs the debugging signal received via the debugging signal transmitting/receiving part (18) to the encoder (15) to allow the received debugging signal to be encoded by the encoder (15) and be transmitted to the external device (20) via the wireless module (16),
wherein the EPG debugging signal is transmitted to the external device by a two-way wireless transmission through an audiovisual signal area of the encoded MPEG signal.

2. A device according to claim 1, further comprising:
a tuner (12) arranged to receive the broadcast signal;
a digital processor (13) arranged to convert the broadcast signal received from the tuner (12) into digital data;
wherein the encoder (15) is arranged to encode the digital data from the digital processor (13); and
a data selecting part (14) arranged to input one of the EPG menu data and the digital data to the encoder (15) under control of the controller (17).

3. A device according to claim 1, wherein the wireless module (16) receives from the controller (17) user data which is included in the broadcast signal and is not encoded and is arranged to transmit the user data to the external device (20) by wireless transmission.

4. A wireless A/V system comprising:
a broadcast receiving/transmitting device (10) as claimed in any preceding claim, and
a wireless receiving device (20) comprising a wireless module (26) operable to transmit/receive data to/from the broadcasting receiving/transmitting device (10) by wireless transmission, and a decoder (27) operable to decode a broadcast signal received through the wireless module (26), to convert it to an image format signal or an audio format signal, and to output it.

5. A method of operating a wireless system comprising a first device (10) and a second device (20) arranged to communicate wirelessly, in which the first device (10) comprises an encoder (15) arranged to output encoded data according to an MPEG format, and the first device (10) is arranged to transmit the encoded data to the second device (20), the method comprising:
receiving a broadcast signal at the first device (10);
detecting EPG information in the broadcast signal;
generating EPG menu data based on the EPG information; and
receiving an EPG debugging signal for enabling debugging of the EPG information in the first device (10);
encoding the EPG debugging signal in the first device (10); and
transmitting the encoded data from the first device (10) to the second device (20) signal by a two-way wireless transmission through an audiovisual signal area of the encoded MPEG signal.

6. The method of claim 5, wherein the encoding process comprises selecting whether to display the EPG information and encoding the EPG menu data if it is selected for display.

7. A method according to claim 5, further comprising the first device receiving user data which is included in the broadcast signal and transmitting the user data to the external device (20) by wireless transmission.

## Patentansprüche

1. Gerät zum Empfangen/Senden von Rundfunksignalen, das Folgendes umfasst:
einen Encoder (15) zum Ausgeben von codierten Daten gemäß einem MPEG-Format;
ein drahtloses Modul (16) zum Senden der codierten Daten zu einem externen Gerät (20) durch drahtlose Übertragung; und
einen Controller (17) zum Erkennen von EPG-(Elektronischer Programmführer)-Informationen in einem empfangenen Rundfunksignal, zum Erzeugen von EPG-Menüdaten auf der Basis der erkannten EPG-Informationen und zum Steuern des Encoders (15) zum Codieren der EPG-Menüdaten und des Rundfunksignals zum Senden der codierten Daten zu dem externen Gerät (20) über das drahtlose Modul (16); und
einen Debugging-Signal-Sende/Empfangs-Teil (18) zum Senden/Empfangen eines EPG-Debugging-Signals,um Debuggen der EPG-Informationen zu ermöglichen;
wobei die Steuerung das über den Teil (18) zum Senden/Empfangen eines Debugging-Signals empfangene Debugging-Signal an den Encoder (15) ausgibt, damit das empfangene Debugging-Signal vom Encoder (15) codiert und über das drahtlose Modul (16) zum externen Gerät (20) gesendet werden kann,
wobei das EPG-Debugging-Signal durch drahtlose Zweiweg-Übertragung durch einen audiovisuellen Signalbereich des codierten MPEG-Signals zum externen Gerät gesendet wird.

2. Gerät nach Anspruch 1, das ferner Folgendes umfasst:
einen Tuner (12) zum Empfangen des Rundfunksignals;
einen Digitalprozessor (13) zum Umwandeln des von dem Tuner (12) empfangenen Rundfunksignals in digitale Daten;
wobei der Encoder (15) zum Codieren der digitalen Daten vom Digitalprozessor (13) ausgelegt ist; und
einen Datenauswahlteil (14) zum Eingeben der EPG-Menüdaten oder der digitalen Daten in den Encoder (15) unter der Steuerung des Controllers (17).

3. Gerät nach Anspruch 1, wobei das drahtlose Modul (16) vom Controller (17) Benutzerdaten empfängt, die in dem Rundfunksignal enthalten und nicht codiert sind, und zum Senden der Benutzerdaten durch drahtlose Übertragung zu dem externen Gerät (20) ausgelegt ist.

4. Drahtloses A/V-System, das Folgendes umfasst:
ein Gerät (10) zum Empfangen/Senden von Rundfunkdaten nach einem vorherigen Anspruch, und
ein drahtloses Empfangsgerät (20), das ein drahtloses Modul (26) zum Senden/Empfangen von Daten zu/von dem Gerät (10) zum Empfangen/Senden von Rundfunkdaten durch drahtlose Übertragung sowie einen Decoder (27) zum Decodieren eines durch das drahtlose Modul (26) empfangenen Rundfunksignals umfasst, um es in ein Bildformat-Signal oder ein Audioformat-Signal umzuwandeln und es auszugeben.

5. Verfahren zum Betreiben eines drahtlosen Systems, das ein erstes Gerät (10) und ein zweites Gerät (20) zum drahtlosen Kommunizieren umfasst, wobei das erste Gerät (10) einen Encoder (15) zum Ausgeben von codierten Daten gemäß einem MPEG-Format umfasst und das erste Gerät (10) zum Senden der codierten Daten zum zweiten Gerät (20) ausgelegt ist, wobei das Verfahren Folgendes beinhaltet:
Empfangen eines Rundfunksignals am ersten Gerät (10);
Erkennen von EPG-Informationen in dem Rundfunksignal;
Erzeugen von EPG-Menüdaten auf der Basis der EPG-Informationen; und
Empfangen eines EPG-Debugging-Signals zum Ermöglichen von Debugging der EPG-Informationen im ersten Gerät (10);
Codieren des EPG-Debugging-Signals im ersten Gerät (10); und
Senden der codierten Daten vom ersten Gerät (10) zum zweiten Gerät (20) durch drahtlose Zweiweg-Übertragung durch einen audiovisuellen Signalbereich des codierten MPEG-Signals.

6. Verfahren nach Anspruch 5, wobei der Codierprozess das Auswählen, ob die EPG-Informationen angezeigt werden sollen, und das Codieren der EPG-Menüdaten beinhaltet, wenn sie zum Anzeigen ausgewählt wurden.

7. Verfahren nach Anspruch 5, das ferner beinhaltet, dass das erste Gerät Benutzerdaten empfängt, die in dem Rundfunksignal enthalten sind, und die Benutzerdaten durch drahtlose Übertragung zu dem externen Gerät (20) sendet.

## Revendications

1. Dispositif de réception/émission de diffusion comprenant :
un codeur (15) agencé pour produire en sortie des données codées selon un format MPEG ;
un module sans fil (16) pour transmettre les données codées à un dispositif externe (20) par transmission sans fil ; et
une unité de commande (17) agencée pour détecter des informations de Guide de Programme Electronique (EPG) dans un signal de diffusion reçu, générer des données de menu EPG en fonction des informations EPG détectées, et commander au codeur (15) de coder les données de menu EPG et le signal de diffusion pour transmettre les données codées au dispositif externe (20) par l'intermédiaire du module sans fil (16) ; et
une partie d'émission/réception de signal de mise au point (18) pour émettre/recevoir un signal de mise au point EPG afin de permettre la mise au point des informations EPG ;
dans lequel l'unité de commande produit en sortie le signal de mise au point reçu par l'intermédiaire de la partie d'émission/réception de signal de mise au point (18) destiné au codeur (15) pour permettre le codage par le codeur (15) du signal de mise au point reçu et la transmission de celui-ci au dispositif externe (20) par l'intermédiaire du module sans fil (16),
dans lequel le signal de mise au point EPG est transmis au dispositif externe par transmission sans fil bidirectionnelle par le biais d'une zone de signal audiovisuelle du signal MPEG codé.

2. Dispositif selon la revendication 1, comprenant en outre :
un syntoniseur (12) agencé pour recevoir le signal de diffusion ;
un processeur numérique (13) agencé pour convertir le signal de diffusion reçu du syntoniseur (12) en données numériques ;
dans lequel le codeur (15) est agencé pour coder les données numériques reçues du processeur numérique (13) ; et
une partie de sélection de données (14) agencée pour entrer l'une des données de menu EPG et des données numériques dans le codeur (15) sous la commande de l'unité de commande (17).

3. Dispositif selon la revendication 1, dans lequel le module sans fil (16) reçoit de l'unité de commande (17) des données d'utilisateur qui sont incluses dans le signal de diffusion et qui ne sont pas codées et est agencé pour transmettre les données d'utilisateur au dispositif externe (20) par transmission sans fil.

4. Système A/V sans fil comprenant :
un dispositif de réception/émission de diffusion (10) *selon l'une quelconque des revendications précédentes, et*
*un dispositif de réception sans fil (20) comprenant un module sans fil (26) exploitable pour transmettre des données au dispositif de réception*/*émission de diffusion (10*) *et recevoir des données de celui-ci par transmission sans fil, et un décodeur (27) exploitable pour décoder un signal de diffusion reçu par le biais du module sans fil (26), afin de le convertir en un signal de format vidéo ou un signal de format audio, et le produire en sortie.*

5. *Procédé d'exploitation d'un système sans fil comprenant un premier dispositif (10) et un second dispositif (20) agencé pour communiquer sans fil, dans lequel le premier dispositif (10) comprend un codeur (15) agencé pour produire en sortie des données codées* selon un format MPEG, et le premier dispositif (10) est agencé pour transmettre les données codées au second dispositif (20), le procédé comprenant :
la réception d'un signal de diffusion au niveau du premier dispositif (10) ;
la détection d'informations EPG dans le signal de diffusion ;
la génération de données de menu EPG en fonction des informations EPG ; et
la réception d'un signal de mise au point EPG pour permettre la mise au point des informations EPG dans le premier dispositif (10) ;
le codage du signal de mise au point EPG dans le premier dispositif (10) ; et
la transmission des données codées du premier dispositif (10) au second dispositif (20) par transmission sans fil bidirectionnelle par le biais d'une zone de signal audiovisuelle du signal MPEG codé.

6. Procédé selon la revendication 5, dans lequel le processus de codage comprend la sélection de l'affichage ou non des informations EPG et le codage des données de menu EPG si un affichage est sélectionné.

7. Procédé selon la revendication 5, comprenant en outre la réception par le premier dispositif de données d'utilisateur qui sont incluses dans le signal de diffusion et la transmission des données d'utilisateur au dispositif externe (20) par transmission sans fil.
